# EUROPÄISCHE PATENTSCHRIFT

(11) **EP 2 660 207 B1**
(45) Veröffentlichungstag und Bekanntmachung des Hinweises auf die Patenterteilung: **09.01.2019**
(21) Anmeldenummer: 13002378.1
(22) Anmeldetag: 03.05.2013
(51) Int. Cl.: C02F 3/12, C02F 3/20, C02F 3/22

(54) **Vorrichtung und Verfahren zum Betrieb von SBR-Kläranlagen**
Device and method for operating SBR sewage treatment plants
Dispositif et procédé de fonctionnement d'installations d'épuration SBR

(30) Priorität: 04.05.2012 DE 102012008928
(43) Veröffentlichungstag der Anmeldung: 06.11.2013
(73) Patentinhaber: KLARO GmbH, 95447 Bayreuth (DE)
(72) Erfinder: Schütz, Waldemar, 95445 Bayreuth (DE)
(74) Vertreter: Spranger, Stephan

(56) Entgegenhaltungen:
- EP-A1- 1 630 138
- CH-A- 349 552
- DE-B3-102011 009 138
- DE-U1-202008 009 513
- DE-U1-202010 009 084
- US-A- 5 217 609

## Beschreibung

Die Erfindung betrifft eine Vorrichtung und ein Verfahren zum Betrieb von SBR(Sequency Batch Reactor)-Kläranlagen, nämlich zur Verteilung von Druckluft in aeroben Abwasserbehandlungsanlagen, vorzugsweise in Kleinkläranlagen und kleinen Kläranlagen, mit Hilfe einer Druckluftquelle, z.B. eines Verdichters bzw. Gebläses. Das System umfasst dabei zumindest eine Belüftungseinrichtung sowie zumindest zwei Druckluftheber zum Fördern von Wasser, Abwasser und sonstigen feststoffbeladenen Suspensionen. Dabei zeichnet sich das Verfahren dadurch aus, dass die Komponenten Belüftungs- und Drucklufthebereinrichtungen eines diskontinuierlich arbeitenden Klärverfahrens miteinander verbunden sind.

In Kleinkläranlagen und kleinen Kläranlagen, die mit einem entsprechenden aeroben SBR-Verfahren betrieben werden, muss das Abwasser unter anderem gefördert und belüftet werden. In vielen dieser Anlagen zur Abwasserbehandlung werden Druckluftheber bzw. Mammutpumpen zum Fördern von Abwasser eingesetzt. Zur Belüftung des Abwassers werden unter anderem Belüftungseinrichtungen mit Membranbelüftem am Boden der aeroben Behandlungsstufe installiert. Diese Belüftungseinrichtungen (z.B. Membranbelüfter, wie etwa Tellerbelüfter oder Rohrbelüfter) werden ebenfalls mit Druckluft über separate Luftleitungen versorgt.

Druckluftgesteuerte Einrichtungen zur Belüftung und Fördern von Abwasser in diskontinuierlichen Klärverfahren - unter anderem in SBR-Verfahren - werden nach Stand der Technik über jeweils einen eigenen Leitungsanschluss mit Druckluft versorgt. So ist in einer SBR-Anlage für jeden eingesetzten Druckluftheber und für die Belüftungseinheit jeweils eine Luftleitung erforderlich. Die einzelnen Hebereinrichtungen und die Belüftungseinrichtung werden somit unabhängig voneinander über eine eigenständige Luftleitung mit Druckluft versorgt und in einer zeitlichen Abfolge betrieben. Die für den Betrieb erforderliche Druckluft wird von einer Druckluftquelle, z.B. einem Verdichter bzw. Gebläse, erzeugt und über einen Druckluftverteiler geführt. Der Druckluftverteiler enthält mehrere Abgänge, die mit je einem Ventil ausgebildet sind. Diese Ventile sind steuerseitig verschließbar. Zum Steuern der Luftverteilung sind der Verdichter und die jeweiligen Ventile an eine Steuerungseinrichtung angeschlossen. Solche Anlagen des Standes der Technik sind also relativ komplex, erfordern viele Einzelbauteile mit hohem Steuerungsaufwand und sind darüber hinaus dadurch auch noch relativ störanfällig.

Die deutsche Gebrauchsmusterschrift DE 20 2008 009 513 U1 (D1) beschreibt eine Vorrichtung in Form eines Festbettkörpers zur Abwasserreinigung in biologischen Kläranlagen, der bewegliche Folien und ein zentrales Haltesubstrat umfasst. Die Folien stehen senkrecht zum Haltesubstrat und sind fächerförmig angeordnet. Dabei sind zum Heben von Abwasser und Klarwasser über Trennwände von Becken Druckluftheber und zum Beleben eines Reaktorbeckens ein Belüftungsteller vorgesehen. Für die Druckluftversorgung von Drucklufthebem und Belüftungsteller sind dort eine einzige Druckluftquelle, Verzweigungen und mindestens ein Druckluftschaltventil vorgesehen, wobei zwei Druckluftheber gemeinsam betrieben werden und der Belüftungsteller von einem eigenen Druckleitungszweig versorgt wird. Bei Betrieb der Druckluftheber in dem Reaktorbecken wird dort automatisch die Zufuhr von Druckluft zu dem Belüftungsteller gesperrt.

Die deutsche Gebrauchsmusterschrift DE 20 2010 009 084 U1(D2) beschreibt eine biologische Klärvorrichtung mit mindestens einer Klärkammer und Einrichtungen zum Befördern und Behandeln von Abwasser. Dabei sorgt ein Druckluftschalter dafür, dass eine Belüftungseinrichtung abgeschaltet ist, wenn ein oder zwei Druckluftheber für Klarwasser und/oder Abwasserschlamm eingeschaltet werden und umgekehrt.

Die deutsche Patentschrift DE 10 2011 009 138 B3 (D3) beschreibt eine biologische Kläranlage mit einer Druckluftleitung und darin angeordneten Technikkapseln, die eine Druckluftverteilung und Druckluftabschaltung zwischen einem Belüftungsteller und Drucklufthebem bereitstellen.

Der Erfindung liegt erstmals der Gedanke zu Grunde, die unpraktikablen Nachteile der bisher eingesetzten Vorrichtungen und Verfahren zum Betrieb solcher SBR-Kläranlagen zu eliminieren und insbesondere eine Vorrichtung und ein Verfahren erfindungsgemäß vorzusehen, welche(s) auf konstruktiv einfache und somit kostengünstige Weise variabel eingesetzt werden kann und dennoch besonders zuverlässig und störungsfrei arbeiten kann.

Die Aufgabe wird erfindungsgemäß mit einer Vorrichtung mit den Merkmalen gemäß Anspruch 1 sowie einem Verfahren mit den Merkmalen gemäß Anspruch 4 gelöst. Bevorzugte Ausführungsformen sind in den jeweiligen abhängigen Unteransprüchen definiert.

Die erfindungsgemäße Vorrichtung zum Betrieb einer SBR-Kläranlage weist zumindest zwei Druckluftheber und zumindest eine Belüftungseinrichtung auf, welche jeweils über eine Druckluftleitung mit einer Druckluftquelle in Verbindung bringbar sind. Dabei sind erfindungsgemäß die zumindest zwei Druckluftheber über ein gemeinsames Ventil gemeinsam von der Druckluftquelle abtrennbar und/oder mit dieser in Verbindung bringbar und die zumindest eine Belüftungseinrichtung bleibt unabhängig davon mit der Druckluftquelle in Verbindung.

Somit werden erfindungsgemäß die Druckluftheber nicht zeitlich nacheinander mit Druckluft beaufschlagt, sondern zeitgleich über eine einzige vom Druckluftverteiler abgehende Luftleitung. Diese Luftleitung teilt sich anschließend auf die beiden parallel beaufschlagten Druckluftheber auf. Hierfür wird bevorzugt ein Y-Schlauchverbinder aus Kunststoff verwendet. Dabei wird der Durchfluss zu einem der Druckluftheber über eine Querschnittsverengung innerhalb der Luftleitung gedrosselt. Die Luftleitung zur Belüftungseinrichtung bleibt während dieses Vorganges offen, weil diese Luftleitung nicht mit einem Ventil verschlossen werden kann. Da aber der Membranbelüfter am Boden der aeroben Abwasserbehandlungsstufe installiert ist, drückt die gesamte Wassersäule im Behälter gegen den Luftdruck der Belüftungseinrichtung. Dadurch wählt die Druckluft den leichteren Weg und strömt ausschließlich zu den beiden Drucklufthebern. Somit schaltet sich die Belüftung im Verlauf des Förderns von Abwasser nicht ein. Soll nun die aerobe Abwasserbehandlungsstufe belüftet werden, so wird das Ventil und damit die Luftleitung zu den Drucklufthebern verschlossen. Die Druckluft strömt nun ausschließlich über die Belüftungseinrichtung zum Membranbelüfter. Dabei baut sich ein ausreichend hoher Luftdruck auf, wodurch die aerobe Abwasserbehandlungsstufe belüftet wird.

Zur relativ einfachen Einstellbarkeit des Drucks der Druckluft individuell in den einzeln zugeordneten Druckluftleitungen der einzelnen Druckluftheber, z.B. um individuell die Förderleistung der jeweiligen Druckluftheber steuern zu können, kann erfindungsgemäß im Bereich der jeweiligen einzeln zugeordneten Druckluftleitung jeweils ein Drosselventil von dem Fachmann allgemein bekannter Bauart angeordnet sein, mittels welchem jeweils eine Drosselung des Drucks der dort durchströmenden Druckluft vornehmbar ist.

Erfindungsgemäß bevorzugt ist eine gemeinsame Druckluftleitung der zumindest zwei Druckluftheber vorgesehen, in deren Bereich das gemeinsame Ventil angeordnet ist, wobei sich stromabwärts des Ventils die gemeinsame Druckluftleitung in einer Verzweigung auf die dem jeweiligen Druckluftheber einzeln zugeordneten Druckluftleitungen verzweigt.

Um auch standardisierte Bauteile der Steuerung von SBR-Kläranlagen verwenden zu können, kann gemäß einer bevorzugten Ausführungsform der Erfindung zwischen der Druckluftquelle und den Druckluftleitungen ein Druckluftverteiler angeordnet sein, von welchem die gemeinsame Druckluftleitung der zumindest zwei Druckluftheber und die Druckluftleitung der zumindest einen Belüftungseinrichtung abgehen.

Beim erfindungsgemäßen Verfahren zum Betrieb einer SBR-Klänlage sind die zumindest zwei Druckluftheber und die zumindest einer Belüftungseinrichtung jeweils über eine Druckluftleitung mit einer Druckluftquelle in Verbindung bringbar. Dabei sind die zumindest zwei Druckluftheber über ein gemeinsames Ventil gemeinsam von der Druckluftquelle abtrennbar und/oder mit dieser in Verbindung bringbar, so dass sie gleichzeitig mit Druckluft beaufschlagt werden oder nicht. Die zumindest eine Belüftungseinrichtung bleibt unabhängig davon dabei mit der Druckluftquelle in Verbindung und der Druck der Druckluft betreibt nur bei abgetrennten Drucklufthebern die Belüftungseinrichtung. Bei bestehender Verbindung von Drucklufthebern und Druckluftquelle betreibt der Druck der Druckluft nur oder im Wesentlichen nur die Druckluftheber. Der Ausdruck "im Wesentlichen nur" meint in diesem Zusammenhang, dass zumindest ein geringer Luftaustritt aus der zumindest einen Belüftungseinrichtung auch in diesem Betriebszustand möglich sein könnte. Dies kann allerdings erfindungsgemäß bevorzugt durch individuelle zusätzlich bevorzugt vorzunehmende Druckeinstellung im Bereich eines oder mehrerer bzw. sogar aller Druckluftheber vermieden werden, wobei erfindungsgemäß der jeweilige Druck der zu den einzelnen der zumindest zwei Druckluftheber jeweils strömenden Druckluft über ein jeweiliges Drosselventil eingestellt werden kann.

Mit der erfindungsgemäßen Vorrichtung kann insbesondere das erfindungsgemäße Verfahren durchgeführt werden. Die hinsichtlich der erfindungsgemäßen Vorrichtung getroffenen Aussagen und geschilderten Merkmale gelten somit auch, soweit anwendbar, für das erfindungsgemäße Verfahren und umgekehrt.

Die erfindungsgemäße Vorrichtung sowie das erfindungsgemäße Verfahren werden nachfolgend anhand der beispielhaft in der Figur gezeigten Ausführungsform näher erläutert werden. Es zeigt:

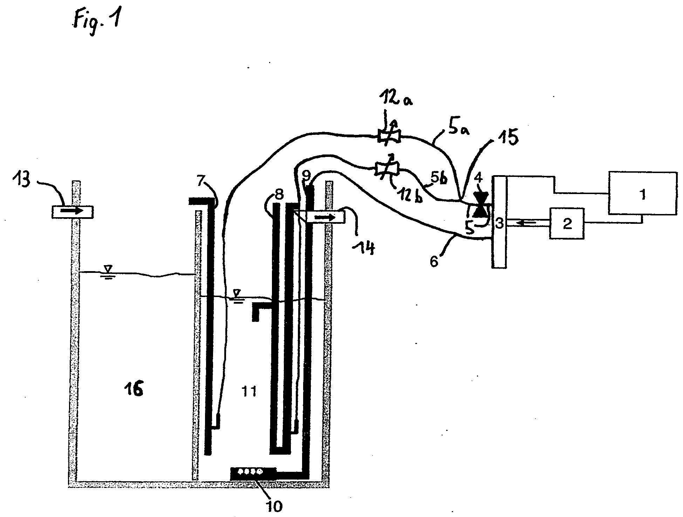

- Fig. 1: eine schematische Darstellung einer SBR-Kläranlage mit einer Vorrichtung gemäß einer bevorzugten Ausführungsform der Erfindung.

Die Fig. 1 zeigt schematisch eine Verrohrung einer Abwasseranlage entsprechend einer SBR-Kläranlage mit einer Vorrichtung zu deren Betrieb gemäß einer bevorzugten Ausführungsform der Erfindung.

Die in Fig. 1 gezeigte erfindungsgemäße Vorrichtung zum Betrieb einer SBR-Klänlage weist zumindest zwei Druckluftheber 7,8 und zumindest eine Belüftungseinrichtung 9, 10 auf, welche jeweils über eine Druckluftleitung 5, 5a, 5b; 6 mit einer Druckluftquelle 2 in Verbindung bringbar sind. Die zumindest zwei Druckluftheber 7, 8 sind über ein gemeinsames Ventil 4 gemeinsam von der Druckluftquelle 2 abtrennbar und/oder mit dieser in Verbindung bringbar und können so gleichzeitig mit Druckluft beaufschlagt werden oder nicht. Die zumindest eine Belüftungseinrichtung (bestehend aus Verrohrung 9 und Tellerbelüfter 10) bleibt dabei stets unabhängig davon über die Druckluftleitung 6 mit der Druckluftquelle 2 in Verbindung und der Druck der Druckluft betreibt nur bei abgetrennten Drucklufthebern 7,9 die Belüftungseinrichtung 9, 10. Bei Verbindung der Druckluftheber 7, 8 über die gemeinsame Druckluftleitung 5, das dann geöffnete gemeinsame Ventil 4, eine Verzweigung 15 und die dem jeweiligen Druckluftheber 7, 8 einzeln zugeordneten Druckluftleitungen 5a, 5b mit der Druckluftquelle 2 betreibt der Druck der Druckluft dann erfindungsgemäß nur oder im Wesentlichen nur die Druckluftheber 7, 8. Im Bereich der einzeln dem jeweiligen Druckluftheber 7, 8 zugeordneten Druckluftleitung 5a und im Bereich der einzeln dem jeweiligen Druckluftheber 7, 8 zugeordneten Druckluftleitung 5b ist jeweils ein Drosselventil 12a, 12b angeordnet, mittels welchem jeweils eine Drosselung des Drucks der dort durchströmenden Druckluft vornehmbar ist. Somit wird dann erfindungsgemäß gleichzeitig z.B. schlammhaltiges Abwasser vom unteren Bereich eines Beckens einer aeroben Abwasserbehandlungsstufe 11 zurück in ein Vorklärbecken 16 geleitet bzw. es gelangt gereinigtes Wasser vom oberen Bereich des Beckens der aeroben Abwasserbehandlungsstufe 11 über einen Ablauf 14 zur Weiterverwendung. Über einen Zulauf 13 gelangt das zu reinigende Abwasser in das Vorklärbecken 16.

Gemäß der Darstellung der Figur 1 ist zwischen der Druckluftquelle 2 und den davon abgehenden Druckluftleitungen 5 und 6 ein Druckluftverteiler 3 angeordnet, von welchem die gemeinsame Druckluftleitung 5 und die Druckluftleitung 6 abgehen.

Die Steuerung der Anlage erfolgt über eine Steuerungseinrichtung 1, welche die Anlage zeitlich steuert und dabei insbesondere auch die Steuerung der Druckluftquelle 2 und des Ventils 4 übernimmt.

Mit der gezeigten Ausführungsform der erfindungsgemäßen Vorrichtung ist insbesondere die Ausführung des erfindungsgemäßen Verfahrens möglich.

## Patentansprüche

1. Vorrichtung zum Betrieb einer SBR-Kläranlage mit zumindest zwei Drucklufthebem (7, 8) und zumindest einer Belüftungseinrichtung (9, 10), welche jeweils über eine Druckluftleitung (5, 5a, 5b; 6) mit einer Druckluftquelle (2) in Verbindung bringbar sind,
**dadurch gekennzeichnet, dass**
die zumindest zwei Druckluftheber (7, 8) über ein gemeinsames Ventil (4) gemeinsam von der Druckluftquelle (2) abtrennbar und/oder mit dieser in Verbindung bringbar sind und die zumindest eine Belüftungseinrichtung (9, 10) unabhängig davon mit der Druckluftquelle (2) in Verbindung bleibt, und dadurch dass im Bereich der einzeln dem ersten Druckluftheber 7) zugeordneten Druckluftleitung (5a) und/oder im Bereich der einzeln dem jeweiligen weiteren Druckluftheber (8) zugeordneten Druckluftleitung (5b) jeweils ein Drosselventil (12a, 12b) angeordnet ist, mittels welchem jeweils eine Drosselung des Drucks der dort durchströmenden Druckluft vornehmbar ist.

2. Vorrichtung nach Anspruch 1, **dadurch gekennzeichnet, dass** eine gemeinsame Druckluftleitung (5) vorgesehen ist, in deren Bereich das gemeinsame Ventil (4) angeordnet ist, und dass stromabwärts des Ventils (4) sich die gemeinsame Druckluftleitung (5) in einer Verzweigung (15) sich auf die dem jeweiligen Druckluftheber (7, 8) einzeln zugeordneten Druckluftleitungen (5a, 5b) verzweigt.

3. Vorrichtung nach Anspruch 2, **dadurch gekennzeichnet, dass** zwischen der Druckluftquelle (2) und den Druckluftleitungen (5, 5a, 5b; 6) ein Druckluftverteiler (3) angeordnet ist, von welchem die gemeinsame Druckluftleitung (5) und die mit der Belüftungseinrichtung verbundene Druckluftleitung (6) abgehen.

4. Verfahren zum Betrieb einer SBR-Kläranlage mit zumindest zwei Drucklufthebern (7, 8) und zumindest einer Belüftungseinrichtung (9, 10), welche jeweils über eine Druckluftleitung (5, 5a, 5b; 6) mit einer Druckluftquelle (2) in Verbindung bringbar sind,
**dadurch gekennzeichnet, dass**
die zumindest zwei Druckluftheber (7, 8) über ein gemeinsames Ventil (4) gemeinsam von der Druckluftquelle (2) abtrennbar und/oder mit dieser in Verbindung bringbar sind und so gleichzeitig mit Druckluft beaufschlagt werden oder nicht, und dass die zumindest eine Belüftungseinrichtung (9, 10) unabhängig davon dabei mit der Druckluftquelle (2) in Verbindung bleibt und der Druck der Druckluft nur bei abgetrennten Drucklufthebem (7, 8) die Belüftungseinrichtung (9, 10) betreibt und bei Verbindung von Drucklufthebern (7, 8) und Druckluftquelle (2) der Druck der Druckluft nur oder im Wesentlichen nur die Druckluftheber (7, 8) betreibt, und dadurch dass
der jeweilige Druck der zu den einzelnen der zumindest zwei Druckluftheber (7, 8) jeweils strömenden Druckluft über ein jeweiliges Drosselventil (12a, 12b) eingestellt wird.

## Claims

1. Device for operating an SBR wastewater treatment plant having at least two airlift pumps (7, 8) and at least one aerator (9, 10), each of which can be connected to a compressed air source (2) by a compressed air line (5, 5a, 5b; 6),
**characterized in that**
the at least two airlift pumps (7, 8) can be jointly disconnected from the compressed air source (2) and/or connected to the same by means of a common valve (4), and the at least one aerator (9, 10) remains connected to the compressed air source (2) independently thereof, and **in that**
one flow control valve (12a, 12b) apiece is located in the region of the compressed air line (5a) individually associated with the first airlift pump (7) and/or in the region of the compressed air line (5b) individually associated with the applicable additional airlift pump (8), by means of which valve an individual throttling can be undertaken of the pressure of the compressed air flowing therethrough.

2. Device according to claim 1, **characterized in that** a common compressed air line (5) is provided and the common valve (4) is arranged in the region thereof, and **in that**, in a branching (15) downstream of the valve (4), the common compressed air line (5) diverges into the compressed air lines (5a, 5b) individually associated with the applicable airlift pump (7, 8).

3. Device according to claim 2, **characterized in that** a manifold (3), from which the common compressed air line (5) and the compressed air line (6) connected to the aerator run, is arranged between the compressed air source (2) and the compressed air lines (5, 5a, 5b; 6).

4. Method for operating an SBR wastewater treatment plant having at least two airlift pumps (7, 8) and at least one aerator (9, 10), each of which can be connected to a compressed air source (2) by a compressed air line (5, 5a, 5b; 6),
**characterized in that**
the at least two airlift pumps (7, 8) can be jointly disconnected from the compressed air source (2) and/or connected to the same by means of a common valve (4), and thus be simultaneously supplied with compressed air or not, and **in that** the at least one aerator (9, 10) remains connected to the compressed air source (2) independently thereof, and the pressure of the compressed air only operates the aerator (9, 10) when the airlift pumps (7, 8) are disconnected, and upon connection of airlift pumps (7, 8) and compressed air source (2), the pressure of the compressed air operates only or essentially only the airlift pumps (7, 8), and **in that**
the applicable pressure of the compressed air flowing to the individual pump of the at least two airlift pumps (7, 8) is adjusted in each case through a separate flow control valve (12a, 12b).

## Revendications

1. Dispositif pour faire fonctionner une installation d'épuration SBR comportant au moins deux élévateurs d'air surpressé (7, 8) et au moins un dispositif de ventilation (9, 10) qui peuvent être respectivement connectés à une source d'air surpressé (2) au moyen d'une conduite d'air surpressé (5, 5a, 5b; 6),
**caractérisé en ce que**,
les au moins deux élévateurs d'air surpressé (7, 8) peuvent être coupés et/ ou connectés ensemble à la source d'air surpressé (2) au moyen d'une valve commune (4) et le au moins un dispositif de ventilation (9, 10), indépendamment de cela, reste connecté à la source d'air surpressé (2) et **en ce que**
dans la zone de la conduite d'air surpressé (5a) affectée séparément au premier élévateur d'air surpressé (8)
et/ou dans la zone de la conduite d'air surpressé (5b) affectée séparément à l'autre élévateur d'air surpressé (8), une soupape d'étranglement (12a, 12b) est agencée respectivement au moyen de laquelle il est possible de réduire la pression de l'air surpressé la traversant.

2. Dispositif selon la revendication 1, **caractérisé en ce qu'**une conduite d'air surpressé commune (5) est prévue dans la zone de laquelle est agencée la valve commune (4) et qu'en aval de la valve (4), la conduite d'air surpressé commune (5) se divise dans un embranchement (15) en conduites d'air surpressé (5a, 5b) séparément affectées aux élévateurs d'air surpressé (7, 8) respectifs.

3. Dispositif selon la revendication 2, **caractérisé en ce qu'**entre la source d'air surpressé (2) et les conduites d'air surpressé (5, 5a, 5b ; 6) est agencé un distributeur d'air surpressé (3) d'où partent la conduite d'air surpressé commune (5) et la conduite d'air surpressé (6) connectée au dispositif de ventilation.

4. Procédé pour faire fonctionner une installation d'épuration SBR comportant au moins deux élévateurs d'air surpressé (7, 8) et au moins un dispositif de ventilation (9, 10) qui respectivement peuvent être connectés à une source d'air surpressé (2) au moyen d'une conduite d'air surpressé (5, 5a, 5b ; 6)
**caractérisé en ce que**
les au moins deux élévateurs d'air surpressé (7, 8) peuvent être coupés et/ou connectés ensemble à la source d'air surpressé (2) au moyen d'une valve commune (4) et ainsi être alimentés en même temps en pression ou non et que le au moins un dispositif de ventilation (9, 10) indépendamment de cela, reste connecté à la source d'air surpressé (2) et la pression de l'air surpressé n' entraîne le dispositif de ventilation (9, 10)que lorsque les élévateurs d'air surpressé (7, 8) sont coupés et que lorsque les élévateurs d'air surpressé (7, 8) sont connectés à la source d'air surpressé (2), la pression de l'air surpressé n'entraîne que ou sensiblement que les élévateurs d'air surpressé (7, 8) et **en ce que**
la pression respective de l'air surpressé (2) allant à chacun des au moins deux élévateurs d'air surpressé (7, 8) est réglée au moyen d'une soupape d'étranglement respective (12a, 12b).
